# EUROPEAN PATENT APPLICATION

(11) **EP 2 169 330 A1**
(43) Date of publication of application: **31.03.2010**
(21) Application number: 08764024.9
(22) Date of filing: 05.06.2008
(51) Int. Cl.: F24H 1/00, E04H 1/04, F24D 3/00, F24D 3/08, F24J 2/04, F25B 27/00

(54) **HOT WATER SUPPLY DEVICE FOR HOUSE**

(30) Priority: 11.06.2007 JP 2007154290
(71) Applicant: Panasonic Corporation, Kadoma-shi Osaka 571-8501 (JP)
(72) Inventor: WATANABE, Takeshi, Osaka 540-6207 (JP)
(74) Representative: Eisenführ, Speiser & Partner
(86) International application number: PCT/JP2008/001427
(87) International publication number: WO 2008/152786

(57) **Abstract**

It is an object of the present invention to provide a hot water supply device for a house capable of eliminating the necessity for installing a heat pump device or a hot water storage tank on a balcony. According to a hot water supply device for a house of the present invention, a compressor 11, a hot water supply heat exchanger 12, an expansion valve 13 and a heat collector 14 are connected to each other through refrigerant piping 15 to constitute a refrigerant circuit 10, a hot water supply pump 21, the hot water supply heat exchanger 12 and a hot water storage tank 22 are connected to each other through water piping 23 to constitute a hot water supply circuit 20, the heat collector 14 includes a heat collecting pipe 14a and a fin 14b which utilize solar heat and atmospheric heat caused by natural wind, the compressor 11, the hot water supply heat exchanger 12, the expansion valve 13, the hot water supply pump 21 and the hot water storage tank 22 constitute a heat source unit 6, and the heat collector 14 and the heat source unit 6 are connected to each other through the refrigerant piping 15 disposed in a space under a floor or above a ceiling of a living space having a bath room or a kitchen.

## Description

### [Technical Field]

The present invention relates to a hot water supply device for a house which can be used in multiple dwelling houses or a stand-alone house having a plurality of stories including a balcony.

### [Background Technique]

Water heaters utilizing solar heat have become widespread, but sufficient hot water can not be used in the event of rain or cloud. Further, since a solar heat absorbing panel is heavy and requires a wide installation area, there is a problem that it can not easily utilized in multiple dwelling houses.
To effectively utilize not only the solar heat but also atmospheric heat, a heat collector, a heat collecting device using a heat pump is proposed (patent documents 1, 2 and 3).
Concerning installation of a solar heat heat collector in a building or a condominium, it is proposed to install the heat collector on a wall or a handrail of a veranda (patent document 4).
[Patent Document 1] Japanese Patent Application Laid-open No.S 61-59155
[Patent Document 2] Japanese Patent Application Laid-open No.2002-31416
[Patent Document 3] Japanese Patent Application Laid-open No.2003-166759
[Patent Document 4] Japanese Patent Application Laid-open No.2001-330327

### [Disclosure of the Invention]

### [Problem to be Solved by the Invention]

When the heat collecting device as shown in the patent documents 1, 2 and 3 is installed in multiple dwelling houses such as a condominium, it is necessary to install, on a balcony, a heat collector which collects solar heat or atmospheric heat, a heat pump device having a compressor and a hot water storage tank. Therefore, they can not be installed in many multiple dwelling houses due to a space problem.
The patent document 4 proposes to install the heat collector on a wall or a handrail of a veranda. However, this proposal also has a problem that the heat pump device and the hot water storage tank must be installed on a balcony.

It is an object of the present invention to provide a hot water supply device for a house capable of eliminating the necessity for installing a heat pump device or a hot water storage tank on a balcony.

### [Means for Solving Problem]

A first aspect of the present invention, there is provided a hot water supply device for a house wherein a compressor, a hot water supply heat exchanger, an expansion valve and a heat collector are connected to each other through refrigerant piping to constitute a refrigerant circuit, a hot water supply pump, the hot water supply heat exchanger and a hot water storage tank are connected to each other through water piping to constitute a hot water supply circuit, the heat collector includes a heat collecting pipe and a fin which utilize solar heat and atmospheric heat caused by natural wind, the compressor, the hot water supply heat exchanger, the expansion valve, the hot water supply pump and the hot water storage tank constitute a heat source unit, and the heat collector and the heat source unit are connected to each other through the refrigerant piping disposed in a space under a floor or above a ceiling of a living space having a bath room or a kitchen.
According to a second aspect of the invention, the hot water supply device for a house of the first aspect further includes a meter box disposed on one side of the living space and a balcony disposed on the other side of the living space, wherein the heat source unit is disposed in the meter box, and the heat collector is disposed in the balcony.
According to a third aspect of the invention, the hot water supply device for a house of the first aspect further includes a bath heat exchanger which exchanges heat of hot water in the hot water storage tank, reheating water piping which connects the bath heat exchanger and a bathtub with each other, and a bath circulation pump provided in the reheating water piping, wherein the bath heat exchanger and the bath circulation pump are provided in the heat source unit.
According to a fourth aspect of the invention, the hot water supply device for a house of the third aspect further includes a heating heat exchanger provided in parallel to the hot water supply heat exchanger, and switching means which switches over flows of a refrigerant toward the hot water supply heat exchanger and the heating heat exchanger in the refrigerant circuit, and a floor heating system disposed in the living space, a heat medium circulation piping which circulates a heat medium through the floor heating system and the heating heat exchanger, and a heating circulation pump provided in the heat medium circulation piping, wherein the heat source unit includes the heating heat exchanger, the switching means and the heating circulation pump.
According to a fifth aspect of the invention, in the hot water supply device for a house of the third aspect, the heat source unit includes a heat pump unit and a hot water storage unit, the heat pump unit includes the compressor, the hot water supply heat exchanger and the expansion valve, the hot water storage unit includes the hot water supply pump, the hot water storage tank, the bath heat exchanger and the bath circulation pump, the hot water storage unit is disposed in the meter box, and the heat pump unit is disposed in the balcony or the living space.
According to a sixth aspect of the invention, in the hot water supply device for a house of the fourth aspect, the heat source unit includes a heat pump unit and a hot water storage unit, the heat pump unit includes the compressor, the hot water supply heat exchanger, the expansion valve, the heating heat exchanger, the switching means and the heating circulation pump, the hot water storage unit includes the hot water supply pump, the hot water storage tank, the bath heat exchanger and the bath circulation pump, the hot water storage unit is disposed in the meter box, and the heat pump unit is disposed in the balcony or the living space.
According to a seventh aspect of the invention, the hot water supply device for a house of the first aspect further includes a a floor-heating heat exchanger which exchanges heat of hot water in the hot water storage tank, heat medium circulation piping which connects the floor-heating heat exchanger and a floor heating system with each other, and a heating circulation pump provided in the heat medium circulation piping, wherein the floor-heating heat exchanger and the heating circulation pump are provided in the heat source unit.
According to an eighth aspect of the invention, in the hot water supply device for a house of the first aspect, an opening is formed in a handrail of the balcony, and the heat collector is disposed in the opening.
According to a ninth aspect of the invention, in the hot water supply device for a house of the eighth aspect, a fixing tool is provided in the opening on the side of the balcony.
According to a tenth aspect of the invention, in the hot water supply device for a house of the eighth aspect, the fin is disposed such that a long side of the fin has an angle with respect to the vertical direction.
According to an eleventh aspect of the invention, in the hot water supply device for a house of the first aspect, the expansion valve is disposed in the balcony instead of in the meter box.
According to a twelfth aspect of the invention, the hot water supply device for a house of the eleventh aspect further includes at least one more heat collector, wherein each of the heat collectors is provided with the expansion valve.
According to a thirteenth aspect of the invention, in the hot water supply device for a house of the eleventh aspect, the plurality of heat collectors are used, and the only one expansion valve is used.
According to a fourteenth aspect of the invention, in the hot water supply device for a house of the eighth aspect, a solar battery is provided outside the opening.
According to a fifteenth aspect of the invention, in the hot water supply device for a house of the first aspect, a tier of the heat collecting pipe is used.
According to a sixteenth aspect of the invention, in the hot water supply device for a house of the first aspect, the heat source unit is disposed in a porch or a trunk room disposed on one side of the living space instead of in the meter box.
According to a seventeenth aspect of the invention, in the hot water supply device for a house of the fifth or sixth aspect, the hot water storage unit is disposed in a porch or a trunk room disposed on one side of the living space instead of in the meter box.
According to an eighteenth aspect of the invention, in the hot water supply device for a house of the first aspect, the heat source unit is disposed in the living space instead of in the meter box.
According to a nineteenth aspect of the invention, in the hot water supply device for a house of the fifth or sixth aspect, the hot water storage unit is disposed in the living space instead of in the meter box.

### [Effect of the Invention]

According to the present invention, it is possible to enhance a hot water supplying efficiency to a hot water storage tank, and to prevent a water piping from being frozen, and the installation operation and the maintenance operation become easy.

### [Brief Description of the Drawings]

Fig. 1 is an explanatory diagram showing a using state of a hot water supply device for a house according to one embodiment of the present invention;
Fig. 2 is a circuit diagram of the hot water supply device for a house according to the embodiment;
Fig. 3 is a circuit diagram of the hot water supply device for a house according to another embodiment;
Fig. 4 is a circuit diagram of the hot water supply device for a house according to another embodiment;
Fig. 5 is a circuit diagram of the hot water supply device for a house according to another embodiment;
Fig. 6 is a perspective view of multiple dwelling houses as viewed from a balcony;
Fig. 7 is a sectional view of a handrail;
Fig. 8 is a sectional view of a handrail according to another embodiment in an installed state of a heat collector;
Fig. 9 is a circuit diagram of a hot water supply device for a house according to another embodiment;
Fig. 10 is a circuit diagram of a hot water supply device for a house according to another embodiment;
Fig. 11 is a circuit diagram of a hot water supply device for a house according to another embodiment;
Fig. 12 is a circuit diagram of a hot water supply device for a house according to another embodiment;
Fig. 13 is a circuit diagram of a hot water supply device for a house according to another embodiment;
Fig. 14 is a circuit diagram of a hot water supply device for a house according to another embodiment;
Fig. 15 is an explanatory diagram showing a using state of a hot water supply device for a house according to another embodiment;
Fig. 16 is an explanatory diagram showing a using state of a hot water supply device for a house according to another embodiment;
Fig. 17 is a sectional view of a handrail showing an installed state of a heat collector according to the embodiment;
Fig. 18 is a front view of the heat collector according to the embodiment;
Fig. 19 is a circuit diagram showing an essential portion of a hot water supply device for a house according to another embodiment;
Fig. 20 is a circuit diagram of a hot water supply device for a house according to another embodiment; and
Fig. 21 is a circuit diagram of a hot water supply device for a house according to another embodiment.

### [Explanation of Symbols]

- 1: living space
- 2: entrance-hall
- 3: meter box
- 4: balcony
- 5: passage
- 6: heat source unit
- 6a: heat pump unit
- 6b: hot water storage unit
- 10: refrigerant circuit
- 11: compressor
- 12: hot water supply heat exchanger
- 13: expansion valve
- 14: heat collector
- 15: refrigerant piping
- 20: hot water supply circuit
- 21: hot water supply pump
- 22: hot water storage tank
- 23: water piping
- 30: bathtub
- 31: bathtub water piping
- 32: bath reheating pump
- 33: bath heat exchanger
- 34: reheating water piping
- 40: floor heating system
- 41: heating heat exchanger
- 42: switching means
- 43: heat medium circulation piping
- 44: heating circulation pump
- 45: floor-heating water piping
- 46: floor-heating pump
- 47: floor-heating heat exchanger
- 51: fixing tool
- 52: solar battery
- 61,62: air conditioner

### [Exemplary Examples of the Invention]

According to the first aspect of the present invention, there is provided a hot water supply device for a house wherein a compressor, a hot water supply heat exchanger, an expansion valve and a heat collector are connected to each other through refrigerant piping to constitute a refrigerant circuit, a hot water supply pump, the hot water supply heat exchanger and a hot water storage tank are connected to each other through water piping to constitute a hot water supply circuit, the heat collector includes a heat collecting pipe and a fin which utilize solar heat and atmospheric heat caused by natural wind, the compressor, the hot water supply heat exchanger, the expansion valve, the hot water supply pump and the hot water storage tank constitute a heat source unit, and the heat collector and the heat source unit are connected to each other through the refrigerant piping disposed in a space under a floor or above a ceiling of a living space having a bath room or a kitchen. With this aspect, the compressor, the hot water supply heat exchanger, the expansion valve, the hot water supply pump and the hot water storage tank can be integrated into one unit as the heat source unit, and the hot water supplying efficiency to the hot water storage tank can be enhanced.
According to the second aspect of the invention, the hot water supply device for a house of the first aspect further includes a meter box disposed on one side of the living space and a balcony disposed on the other side of the living space, wherein the heat source unit is disposed in the meter box, and the heat collector is disposed in the balcony. With this aspect, the heat source unit is disposed in the meter box and only the heat collector is disposed in the balcony. Therefore, the hot water supply device can be provided in a house irrespective of width of the balcony. Further, the hot water supply circuit on the side of a heat source is accommodated in the meter box together with the compressor and the hot water storage tank and with this, it is possible to prevent the water piping from being frozen. Further, not only the water piping but also all of the compressor, the hot water supply heat exchanger, the expansion valve, the hot water supply pump and the hot water storage tank are disposed in the meter box. With this, the installation operation becomes easy and it is easy to carry out the maintenance operation.
According to the third aspect of the invention, in the hot water supply device for a house of the first aspect, the heat source unit includes a bath heat exchanger and a bath circulation pump. With this aspect, the bath heat exchanger and the bath circulation pump are also disposed in the meter box, hot water supplying efficiency to the hot water storage tank is enhanced, the water piping is prevented from being frozen, and the installation operation and the maintenance operation become easy.
According to the fourth aspect of the invention, the hot water supply device for a house of the first aspect further includes a heating heat exchanger provided in parallel to the hot water supply heat exchanger, and switching means which switches over flows of a refrigerant toward the hot water supply heat exchanger and the heating heat exchanger in the refrigerant circuit, and a floor heating system disposed in the living space, a heat medium circulation piping which circulates a heat medium through the floor heating system and the heating heat exchanger, and a heating circulation pump provided in the heat medium circulation piping, wherein the heat source unit includes the heating heat exchanger, the switching means and the heating circulation pump. With this aspect, also when the heating heat exchanger is provided, since the heating heat exchanger, the switching means and the heating circulation pump are disposed in the meter box, hot water supplying efficiency to the hot water storage tank is enhanced, the water piping is prevented from being frozen, and the installation operation and the maintenance operation become easy. Further, hot water in the hot water storage tank is not used as the heating heat exchanger but heat of a refrigerant from the refrigerant circuit is utilized. Thus, a shortage of hot water in the hot water storage tank can be prevented and capacity of the hot water storage tank can be reduced.
According to the fifth aspect of the invention, in the hot water supply device for a house of the third aspect, the heat source unit includes a heat pump unit and a hot water storage unit, the heat pump unit includes the compressor, the hot water supply heat exchanger and the expansion valve, the hot water storage unit includes the hot water supply pump, the hot water storage tank, the bath heat exchanger and the bath circulation pump, the hot water storage unit is disposed in the meter box, and the heat pump unit is disposed in the balcony or the living space. With this aspect, when the heat source unit includes the heat pump unit and the hot water storage tank, if the hot water storage unit is disposed in the meter box, the installation operation and the maintenance operation become easy. Further, even if the heat pump unit is disposed in the living space, it is possible to prevent the water piping from being frozen.
According to the sixth aspect of the invention, in the hot water supply device for a house of the fourth aspect, the heat source unit includes a heat pump unit and a hot water storage unit, the heat pump unit includes the compressor, the hot water supply heat exchanger, the expansion valve, the heating heat exchanger, the switching means and the heating circulation pump, the hot water storage unit includes the hot water supply pump, the hot water storage tank, the bath heat exchanger and the bath circulation pump, the hot water storage unit is disposed in the meter box, and the heat pump unit is disposed in the balcony or the living space. With this aspect, when the heat source unit includes the heat pump unit and the hot water storage unit, if the hot water storage unit is disposed in the meter box, the installation operation and the maintenance operation become easy. Further, even if the heat pump unit is disposed in the living space, it is possible to prevent the water piping from being frozen.
According to the seventh aspect of the invention, in the hot water supply device for a house of the first aspect, the heat source unit includes a floor-heating heat exchanger and a heating circulation pump. With this aspect, also when the floor-heating heat exchanger is provided, if the floor-heating heat exchanger and the heating circulation pump are disposed in the meter box, hot water supplying efficiency to the hot water storage tank is enhanced, the water piping is prevented from being frozen, and the installation operation and the maintenance operation become easy.
According to the eighth aspect of the invention, in the hot water supply device for a house of the first aspect, an opening is formed in a handrail of the balcony, and the heat collector is disposed in the opening. With this aspect, the heat collector can be disposed without exerting an influence upon a balcony space.
According to the ninth aspect of the invention, in the hot water supply device for a house of the eighth aspect, a fixing tool is provided in the opening on the side of the balcony. With this aspect, it is possible to easily dispose the heat collector from the side of the balcony.
According to the tenth aspect of the invention, in the hot water supply device for a house of the eighth aspect, the fin is disposed such that a long side of the fin has an angle with respect to the vertical direction. With this aspect, flow of air from an upper portion of the fin can be induced by downward flow of cold air which is cooled by the fin surface, and atmospheric heat can effectively be utilized.
According to the eleventh aspect of the invention, in the hot water supply device for a house of the first aspect, the expansion valve is disposed in the balcony instead of in the meter box. With this aspect, it is possible to adjust the closing degree of the expansion valve in accordance with variation in the solar heat or atmospheric heat with excellent response.
According to the twelfth aspect of the invention, the hot water supply device for a house of the eleventh aspect further includes at least one more heat collector, wherein each of the heat collectors is provided with the expansion valve. With this aspect, when a plurality of heat collectors are provided in accordance with a structure of a balcony, even if collecting heat values from the solar heat or atmospheric heat are varied due to difference in installation states of the heat collectors, it is possible to enhance the heat collecting efficiency of the heat collectors by adjusting the expansion valve provided in each heat collector.
According to the thirteenth aspect of the invention, in the hot water supply device for a house of the eleventh aspect, the plurality of heat collectors are used, and the only one expansion valve is used. With this aspect, when the installed conditions of the heat collectors are the same, it is possible to control with excellent response by controlling the heat collectors by one expansion valve.
According to the fourteenth aspect of the invention, in the hot water supply device for a house of the eighth aspect, a solar battery is provided outside the opening. With this aspect, the hot water supply device also has the electricity-storing function.
According to the fifteenth aspect of the invention, in the hot water supply device for a house of the first aspect, a tier of the heat collecting pipe is used. With this aspect, it becomes easy to receive the solar heat, and natural wind can also be utilized easily and thus, the atmospheric heat can also be utilized effectively.
According to the sixteenth aspect of the invention, in the hot water supply device for a house of the first aspect, the heat source unit is disposed in a porch or a trunk room disposed on one side of the living space instead of in the meter box. With this aspect, when the space in the meter box is not sufficient, it is possible to prevent the water piping from being frozen by utilizing the porch or trunk room, and the installing operation and the maintenance operation become easy.
According to the seventeenth aspect of the invention, in the hot water supply device for a house of the fifth or sixth aspect, the hot water storage unit is disposed in a porch or a trunk room disposed on one side of the living space instead of in the meter box. With this aspect, when the space in the meter box is not sufficient, it is possible to prevent the water piping from being frozen by utilizing the porch or trunk room, and the installing operation and the maintenance operation become easy.
According to the eighteenth aspect of the invention, in the hot water supply device for a house of the first aspect, the heat source unit is disposed in the living space instead of in the meter box. With this aspect, when the space in the meter box is not sufficient, it is possible to prevent the water piping from being frozen by utilizing the living space, and the installing operation and the maintenance operation become easy.
According to the nineteenth aspect of the invention, in the hot water supply device for a house of the fifth or sixth aspect, the hot water storage unit is disposed in the living space instead of in the meter box. With this aspect, when the space in the meter box is not sufficient, it is possible to prevent the water piping from being frozen by utilizing the living space, and the installing operation and the maintenance operation become easy.

### [Embodiments]

Embodiments of the present invention will be explained below.

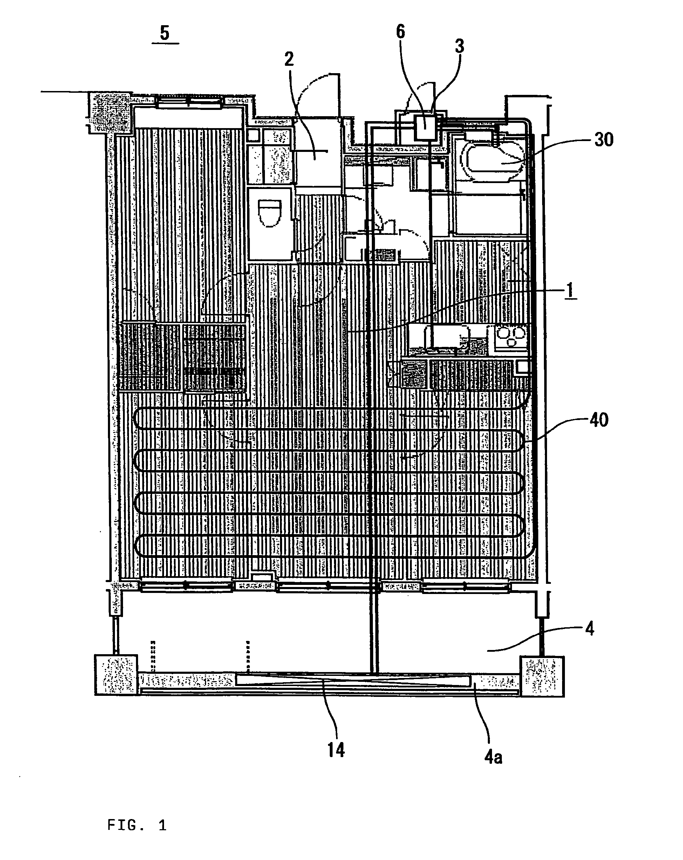

Fig. 1 is an explanatory diagram showing a using state of a hot water supply device for a house according to one embodiment of the present invention. Although a case where the present invention is applied to multiple dwelling houses will be explained in the following embodiments, the invention can also be applied to a stand-alone house.
Fig. 1 shows a plan of a condominium as the multiple dwelling houses. An entrance-hall 2 and a meter box 3 are disposed on one side in a living space 1, and a balcony 4 is provided on the other side of the living space 1. A passage 5 is provided on one side in the living space 1, and the entrance-hall 2 and the meter box 3 face the passage. In this embodiment, the balcony 4 is provided in parallel to the passage 5 with the living space 1 interposed therebetween, but the balcony 4 is provided in a direction intersecting with the passage 5 in some cases. The balcony 4 is provided with a handrail 4a.
Generally, a balcony has no roof, and a veranda has a roof, but in this embodiment, the term "balcony" is defined as including the veranda. The living space 1 in this embodiment means a residential space, and is a space including a Japanese style room, a European style room, a kitchen, a armoire, a closet, a bath room, a rest room and a corridor.
A hot water supply device for a house of the embodiment includes a heat collector 14 and a heat source unit 6. The heat collector 14 is disposed at an opening of the handrail 4a. The heat source unit 6 is disposed in the meter box 3.
The hot water supply device for a house according to the embodiment is utilized for reheating water in a bathtub 30 provided in a bath room, for a heat medium of a floor heating system 40 provided in a European style room, and for supplying hot water to a faucet provided in the bath room, a kitchen or a lavatory.

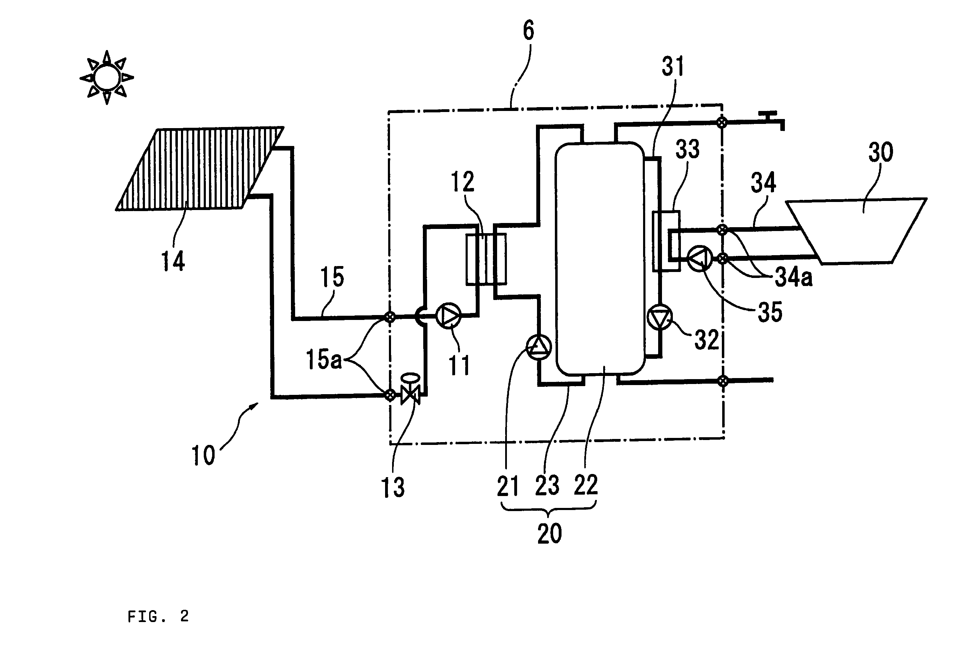

The hot water supply device for a house according to the embodiment will be explained using Fig. 2.
Fig. 2 is a circuit diagram of the hot water supply device for a house according to the embodiment.
The heat collector 14 is connected to a compressor 11, a hot water supply heat exchanger 12 and an expansion valve 13 through refrigerant piping 15to constitute a refrigerant circuit 10.
A hot water supply pump 21, a hot water supply heat exchanger 12 and a hot water storage tank 22 are connected to one another through water piping 23 to constitute a hot water supply circuit 20. Piping for introducing hot water to a faucet is provided in an upper portion of the hot water storage tank 22, and piping for supplying water is provided in a lower portion of the hot water storage tank 22. The hot water storage tank 22 is provided with a bathtub water piping 31 which connects the upper portion and the lower portion. The bathtub water piping 31 is provided with a bath reheating pump 32 and a bath heat exchanger 33. A reheating water piping 34 connects the bath heat exchanger 33 and the bathtub 30 with each other, and the reheating water piping 34 is provided with a bath circulation pump 35.
The heat source unit 6 includes the compressor 11, the hot water supply heat exchanger 12, the expansion valve 13, the hot water supply pump 21, the hot water storage tank 22, the bathtub water piping 31, the bath reheating pump 32, the bath heat exchanger 33 and the bath circulation pump 35. It is preferable that members constituting the heat source unit 6 are accommodated in an outer case in terms of configuration, but the outer case may not be provided so that the members can easily be accommodated in a limited space such as the meter box 3, and the layout of each member may be changed flexibly. However, in order to exhibit function as the heat source unit 6, it is necessary that at least the refrigerant piping 15 includes a connecting portion 15a which connects piping on the side of the heat collector 14 and piping on the side of the heat source unit 6, and the reheating water piping 34 includes a connecting portion 34a which connects piping on the side of the bathtub 30 and piping on the side of the heat source unit 6. It is preferable that piping for introducing hot water to the faucet and piping for supplying water also have connecting portions.

According to the hot water supply device for a house of the embodiment, solar heat and atmospheric heat are collected by the heat collector 14, and the heat is dissipated by the hot water supply heat exchanger 12, thereby heating water that is supplied from the lower portion of the hot water storage tank 22. Hot water heated by the hot water supply heat exchanger 12 is stored in the upper portion of the hot water storage tank 22.
As shown in Fig. 1, the heat source unit 6 of the embodiment is accommodated in the meter box 3 which faces the passage 5, the installation operation and the maintenance operation can easily be carried out. The heat collector 14 and the heat source unit 6 are connected to each other through the refrigerant piping 15, and the water piping 23 is accommodated in the meter box 3 together with the hot water storage tank 22 and the compressor 11. Therefore, it is possible to prevent the water piping 23 from being frozen, radiation of the water piping 23 can be reduced and thus, hot water supplying efficiency can be enhanced. As shown in Fig. 1, a bath room or a lavatory is provided in the living space 1 on the side of the passage 5 in many cases. In such cases, since the hot water supply piping to the faucet and run length of the reheating water piping 34 to the bathtub 30 are short, hot water can be supplied with excellent response.

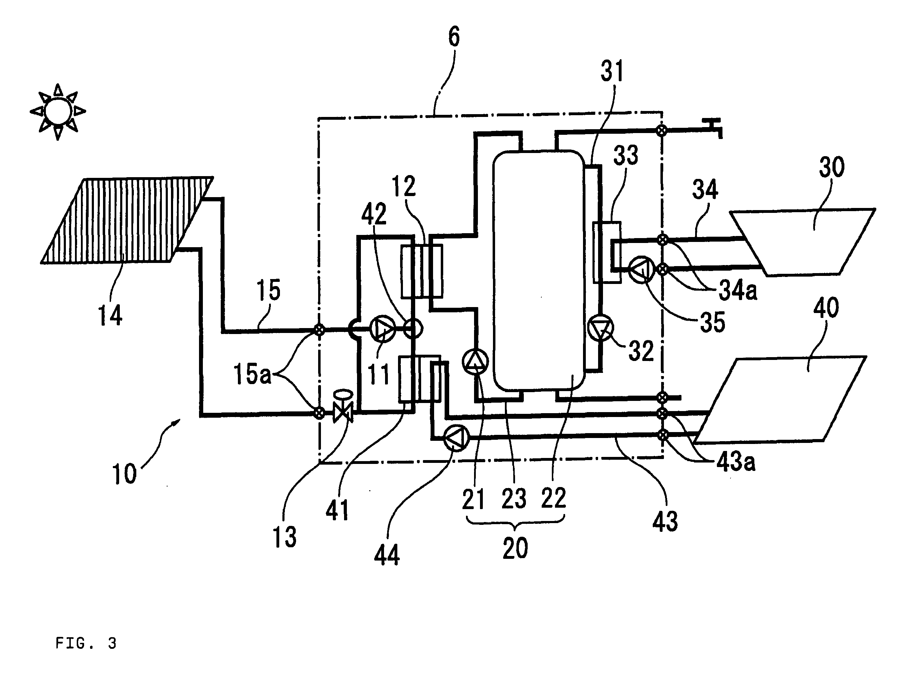

Next, a hot water supply device for a house according to another embodiment will be explained using Fig. 3.
Fig. 3 is a circuit diagram of the hot water supply device for a house according to the other embodiment. Structures which are common to those shown in Fig. 2 are designated with the same numbers and explanation thereof will be omitted.
This embodiment includes the floor heating system 40 shown in Fig. 1.
The refrigerant circuit 10 includes a heating heat exchanger 41 provided in parallel to the hot water supply heat exchanger 12, and switching means 42 which switches between flows of refrigerants in the hot water supply heat exchanger 12 and the heating heat exchanger 41. The heating heat exchanger 41 and the switching means 42 are provided in the heat source unit 6.
The heat source unit 6 includes heat medium circulation piping 43 for circulating heat medium to the floor heating system 40 and the heating heat exchanger 41, and heating circulation pump 44 provided in the heat medium circulation piping 43. In this embodiment, the heat medium circulation piping 43 includes a connecting portion 43a which connects piping on the side of the floor heating system 40 and piping on the side of the heat source unit 6 with each other.
In this embodiment, hot water is supplied to the hot water storage tank 22 and heat is supplied to the floor heating system 40 by the switching operation of the switching means 42. According to the embodiment, as heat supply to the floor heating system 40, hot water of the hot water storage tank 22 is not used, but refrigerant heat caused by the refrigerant circuit 10 is utilized. Therefore, a shortage of hot water in the hot water storage tank 22 can be prevented and capacity of the hot water storage tank 22 can be reduced.

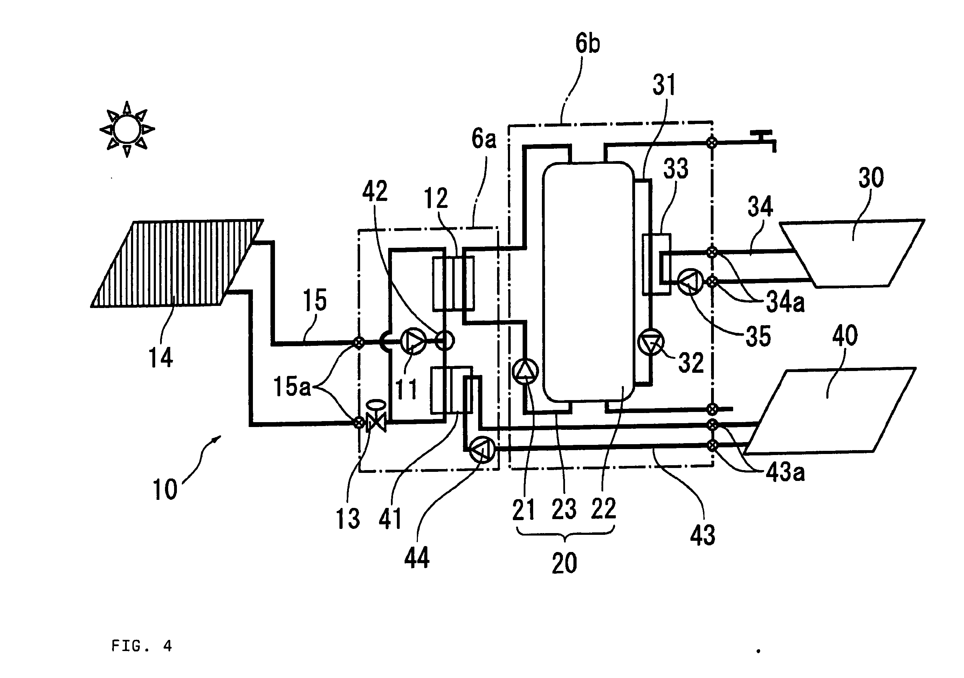

Next, a hot water supply device for a house according to another embodiment will be explained using Fig. 4.
Fig. 4 is a circuit diagram of the hot water supply device for a house according to the other embodiment. Structures which are common to those shown in Fig. 3 are designated with the same numbers and explanation thereof will be omitted.
In this embodiment, the heat source unit 6 includes a heat pump unit 6a and a hot water storage unit 6b. The heat pump unit 6a includes the compressor 11, the hot water supply heat exchanger 12 and the expansion valve 13, and the hot water storage unit 6b includes the hot water supply pump 21, the hot water storage tank 22, the bath reheating pump 32, the bath heat exchanger 33 and the bath circulation pump 35.
Since the heat source unit 6 includes the heat pump unit 6a and the hot water storage unit 6b as in this embodiment, the flexibility of installation can be enhanced. Also when the heat source unit 6 includes the heat pump unit 6a and the hot water storage unit 6b, the heat pump unit 6a and the hot water storage unit 6b may be disposed in the meter box 3, but the hot water storage unit 6b can be disposed in the meter box 3 and the heat pump unit 6a may be disposed on the balcony 4 or in the living space 1. According to this embodiment, since the hot water storage unit 6b is disposed in the meter box 3, the installing operation and the maintenance operation become easy. Further, even if the heat pump unit 6a is disposed in the living space, it is possible to prevent the water piping from being frozen, and since there is no air-blowing fan, a noise problem or a heat efficiency problem is not generated.

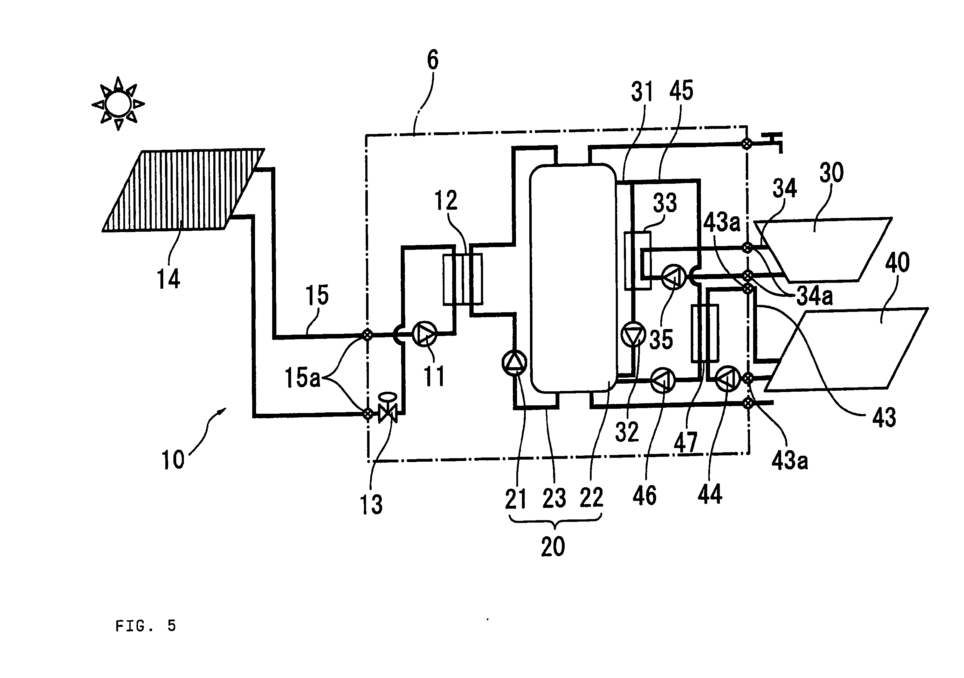

Next, a hot water supply device for a house according to another embodiment will be explained using Fig. 5.
Fig. 5 is a circuit diagram of the hot water supply device for a house according to the other embodiment. Structures which are common to those in the above embodiments are designated with the same numbers and explanation thereof will be omitted.
This embodiment includes the floor heating system 40 shown in Fig. 1.
The hot water supply device for a house according to the embodiment includes a floor-heating water piping 45 which connects an upper portion and a lower portion of the hot water storage tank 22 with each other, a floor-heating pump 46 provided in the floor-heating water piping 45, a floor-heating heat exchanger 47 provided in the floor-heating water piping 45, the heat medium circulation piping 43 which connects the floor-heating heat exchanger 47 and the floor heating system 40 with each other, and the heating circulation pump 44 provided in the heat medium circulation piping 43. According to the examplary example, even when there is provided with the floor heating system 40, the floor-heating water piping 45, the floor-heating pump 46, the floor-heating heat exchanger 47 and the heating circulation pump 44 are disposed in the meter box 3. With this, it is possible to enhance the hot water supply efficiency to the hot water storage tank, and to prevent the water piping from being frozen, and the installation operation and the maintenance operation become easy.

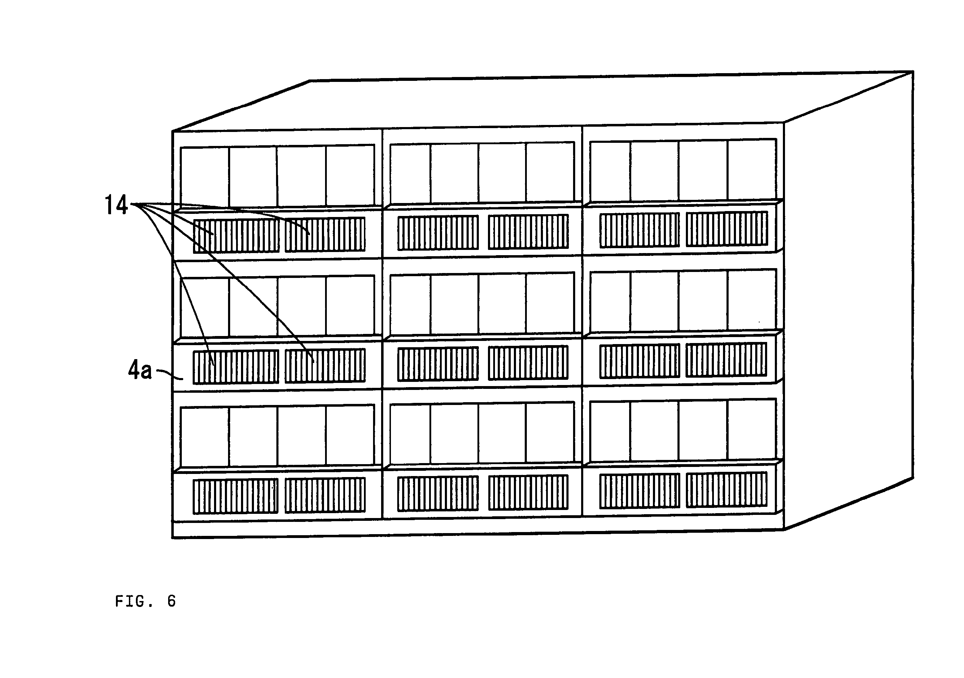

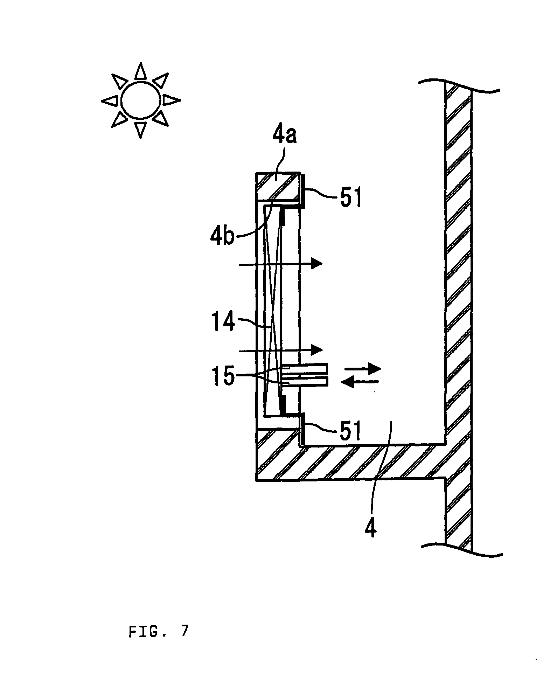

Next, an installed state of the heat collector in multiple dwelling houses will be explained using Figs. 6 and 7.
Fig. 6 is a perspective view of multiple dwelling houses as viewed from a balcony. Fig. 7 is a sectional view of a handrail.
The heat collector 14 according to the embodiment is disposed in an opening 4b of the handrail 4a of the balcony 4. Although two heat collectors 14 are provided for each home in this embodiment, a single heat collector 14 or three or more heat collectors 14 may be provided for each hole.
The heat collector 14 is mounted from the balcony 4 side of the opening 4b by a fixing tool 51. The heat collector 14 is disposed such that it does not project outward from the opening 4b.

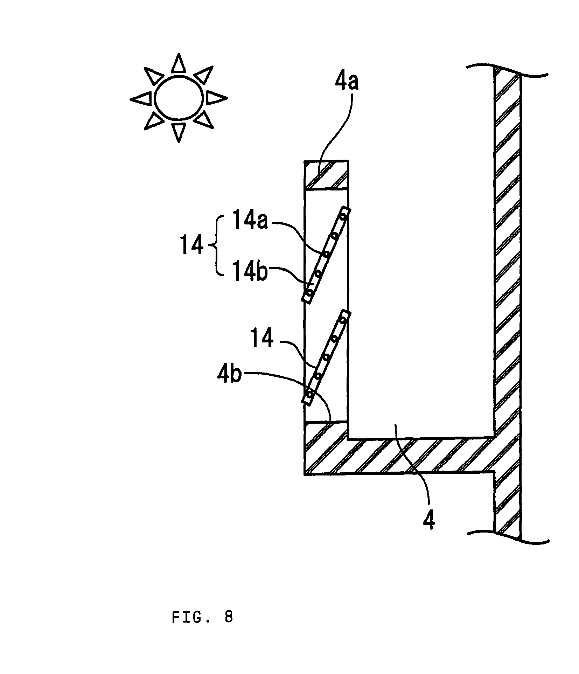

Next, another embodiment of the installed state of the heat collector in the multiple dwelling houses will be explained using Fig. 8.
Fig. 8 is a sectional view of a handrail according to this embodiment in an installed state of a heat collector.
In this embodiment, a plurality of heat collectors 14 are arranged in one opening 4b in the height direction. As shown in the drawing, each heat collector 14 includes a tier of heat collecting pipe 14a and a fin 14b, and the long side of the fin 14b has an angle with respect to the vertical direction. According to the embodiment, air flow from an upper portion of the fin 14b can be induced by downward flow of cool air cooled by a surface of the fin 14b, and the atmospheric heat can effectively be utilized. According to the embodiment, since a tier of heat collecting pipes 14a is used, it becomes easy to receive the solar heat, natural wind can easily be utilized and the atmospheric heat can also be utilized effectively. The fin 14b is disposed in a direction perpendicular to the axis of the heat collecting pipe 14a, and a plurality of fins 14b are disposed at distances from one another.

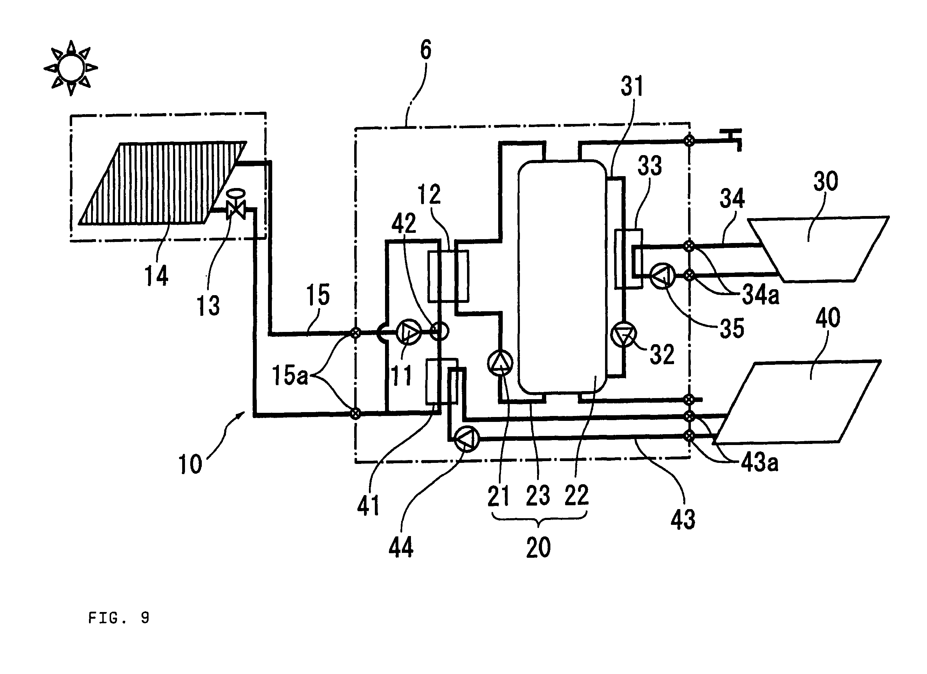

Next, a hot water supply device for a house according to another embodiment will be explained using Fig. 9.
Fig. 9 is a circuit diagram of the hot water supply device for a house according to the other embodiment. Structures which are common to those in the above embodiments are designated with the same numbers and explanation thereof will be omitted.
In this embodiment, the expansion valve 13 shown in Fig. 3 is disposed in the balcony 4 together with the heat collector 14. According to this embodiment, it is possible to adjust the closing degree of the expansion valve 13 in accordance with the solar heat or atmospheric heat with excellent response.
If the expansion valve 13 is disposed in the balcony 4 together with the heat collector 14 also in the embodiments shown in Figs. 2, 4 and 5, like the present embodiment, it is possible to adjust the closing degree of the expansion valve 13 in accordance with variation in the solar heat or atmospheric heat with excellent response.

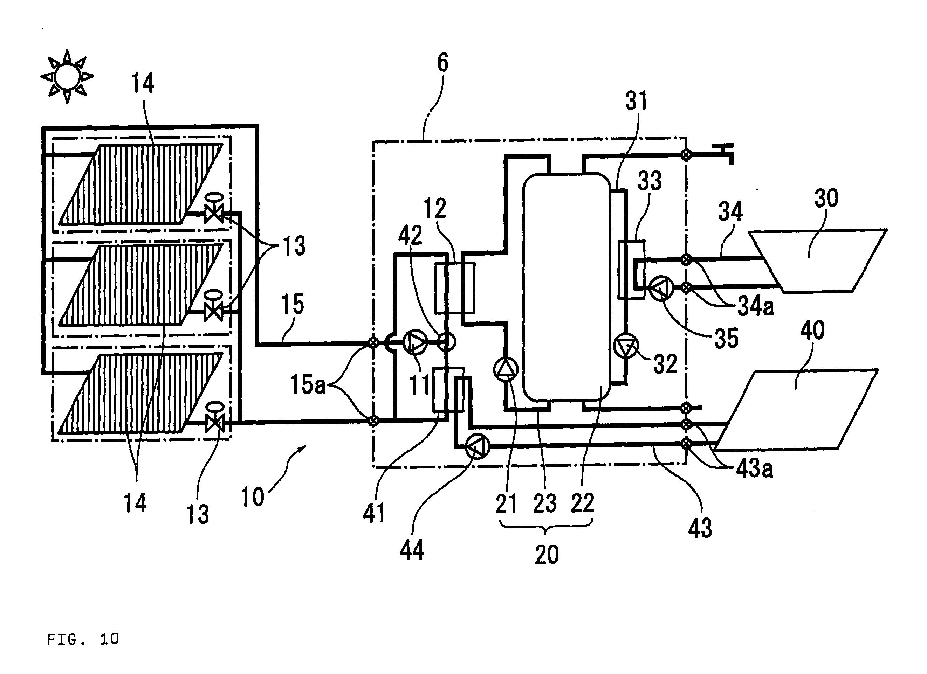

Next, a hot water supply device for a house according to another embodiment will be explained using Fig. 10.
Fig. 10 is a circuit diagram of the hot water supply device for a house according to the other embodiment. Structures which are common to those in the above embodiments are designated with the same numbers and explanation thereof will be omitted.
In this embodiment, a plurality of heat collectors 14 as shown in Fig. 9 are provided, and expansion valves 13 respectively corresponding to the heat collectors 14 are disposed in the balcony 4 together with the heat collectors 14. According to this embodiment, when a plurality of heat collectors 14 are disposed in accordance with a structure of the balcony 4, even if heat collecting abilities from the solar heat or atmospheric heat are varied due to difference in installed states of the heat collectors 14, it is possible to enhance the heat collecting efficiencies of the heat collectors 14 by adjusting the expansion valves 13 provided in the respective heat collectors 14.
In the embodiments shown in Figs. 2, 4 and 5 also, like the present embodiment, if a plurality of heat collectors 14 may be provided and expansion valves 13 respectively corresponding to the heat collectors 14 are disposed in the balcony 4 together with the heat collectors 14, it is possible to enhance the heat collecting efficiencies of the heat collectors 14 by adjusting the expansion valves 13 provided in the respective heat collectors 14.

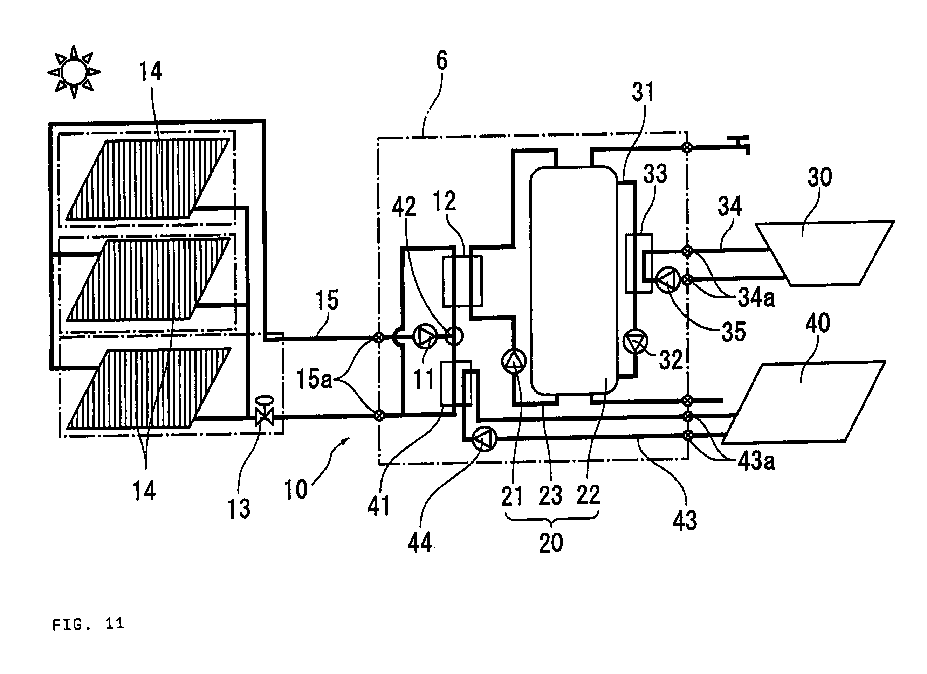

Next, a hot water supply device for a house according to another embodiment will be explained using Fig. 11.
Fig. 11 is a circuit diagram of the hot water supply device for a house according to the other embodiment. Structures which are common to those in the above embodiments are designated with the same numbers and explanation thereof will be omitted.
According to this embodiment, in the embodiment shown in Fig. 10, one expansion valve 13 is provided for a plurality of heat collectors 14. According to this embodiment, when the installed conditions of the heat collectors 14 are the same, it is possible to control the heat collectors 14 by controlling one expansion valve 13 with excellent response.
In the embodiments shown in Figs. 2, 4 and 5 also, like the present embodiment, a plurality of heat collectors 14 may be provided and one expansion valve 13 may be provided for the plurality of heat collectors 14. With this, when the installed conditions of the heat collectors 14 are the same, it is possible to control the heat collectors 14 by controlling one expansion valve 13 with excellent response.

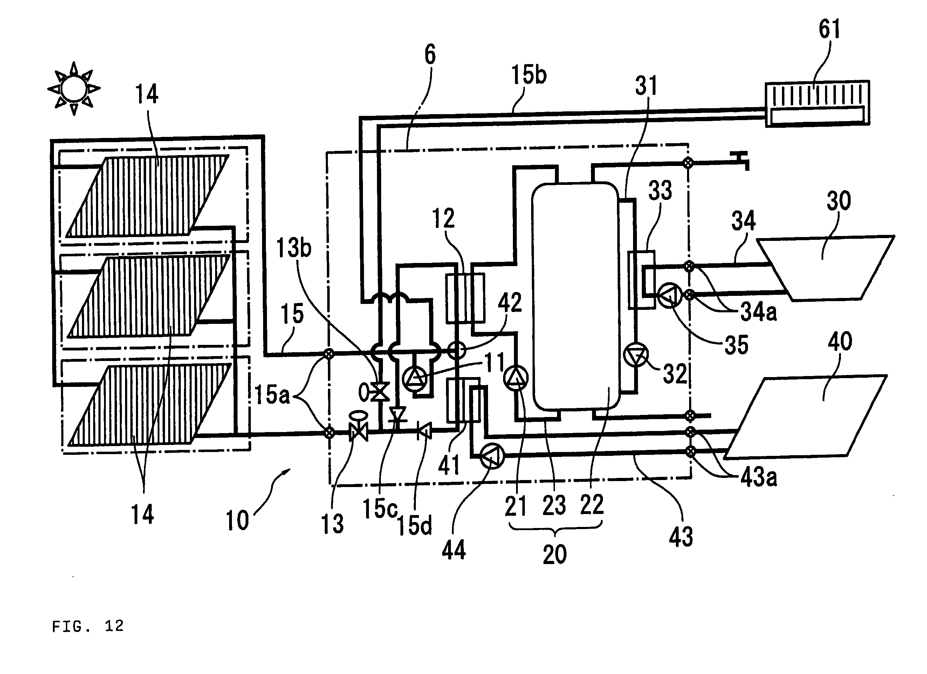

Next, a hot water supply device for a house according to another embodiment will be explained using Fig. 12.
Fig. 12 is a circuit diagram of the hot water supply device for a house according to the other embodiment. Structures which are common to those in the above embodiments are designated with the same numbers and explanation thereof will be omitted.
In this embodiment, in the embodiment shown in Fig. 3, a plurality of heat collectors 14 are provided and an air conditioner 61 is provided.
The air conditioner 61 is provided in parallel to the heat collectors 14. A refrigerant piping 15b which connects the air conditioner 61 includes an expansion valve 13b. A check valve 15c is provided in an outlet-side refrigerant piping of the hot water supply heat exchanger 12, and a check valve 15d is provided in an outlet-side refrigerant piping of the heating heat exchanger 41.
According to this embodiment, in addition to the function of the embodiment shown in Fig. 3, it is possible to cool and dehumidify air by the air conditioner 61.
That is, a refrigerant which dissipated heat by the hot water supply heat exchanger 12 or the heating heat exchanger 41 is decompressed by closing the expansion valve 13, the refrigerant is introduced into the air conditioner 61, and the refrigerant is vaporized in the air conditioner 61. With this, a cooling operation or a dehumidifying operation can be carried out.
In the embodiments shown in Figs. 2, 4 and 5 also, like the present embodiment, a plurality of heat collectors 14 can be provided and the air conditioner 61 can be provided.

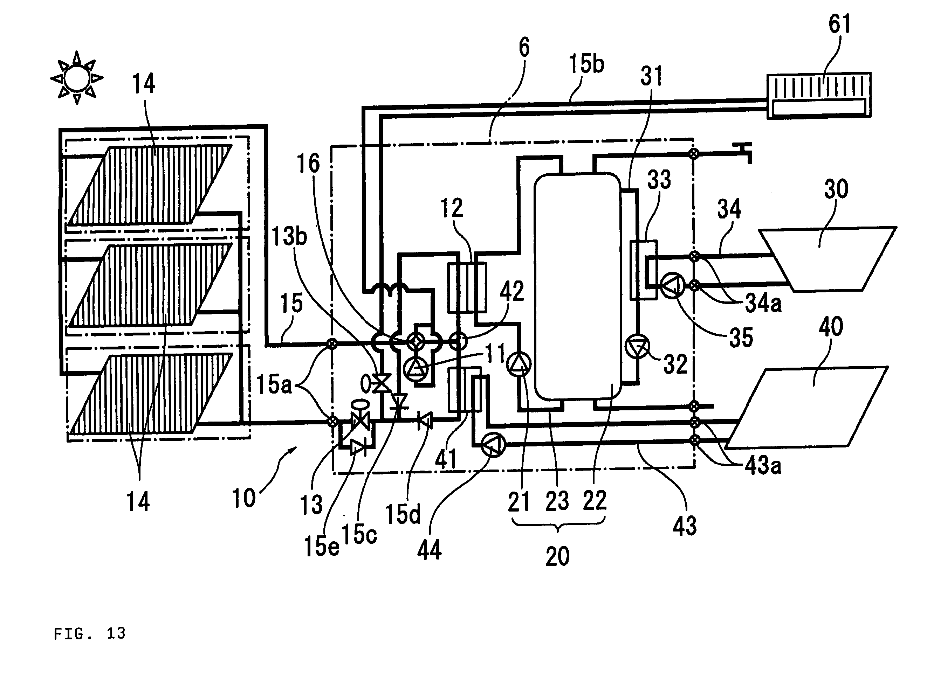

Next, a hot water supply device for a house according to another embodiment will be explained using Fig. 13.
Fig. 13 is a circuit diagram of the hot water supply device for a house according to the other embodiment. Structures which are common to those in the above embodiments are designated with the same numbers and explanation thereof will be omitted.
According to this embodiment, in the embodiment shown in Fig. 12, there is provided a four-way valve 16 which changes a flow of a refrigerant in a suction-side piping and a discharge-side piping of the compressor 11. It is preferable that a circuit which bypasses the expansion valve 13 is provided and this bypass circuit is provided with a check valve 15e.
According to this embodiment, it is possible to introduce a refrigerant discharged from the compressor 11 into the heat collector 14, and to return a refrigerant from the heat collector 14 to the compressor 11 through the check valve 15e, the expansion valve 35 and the air conditioner 61.
In this embodiment, the heat collector 14 can be utizlied as a radiator and the air conditioner 61 can carry out the cooling operation and the dehumidifying operation. According to this embodiment, a hot water storage in the hot water storage tank 22 is not required, and when the floor heating system 40 is not used, the air conditioner 61 can carry out the cooling operation and the dehumidifying operation by utilizing the heat collector 14 as a radiator.
In the embodiments shown in Figs. 2, 4 and 5 also, like the present embodiment, it is possible to provide a four-way valve 16 which changes a flow of a refrigerant in a suction-side piping and a discharge-side piping of the compressor 11.

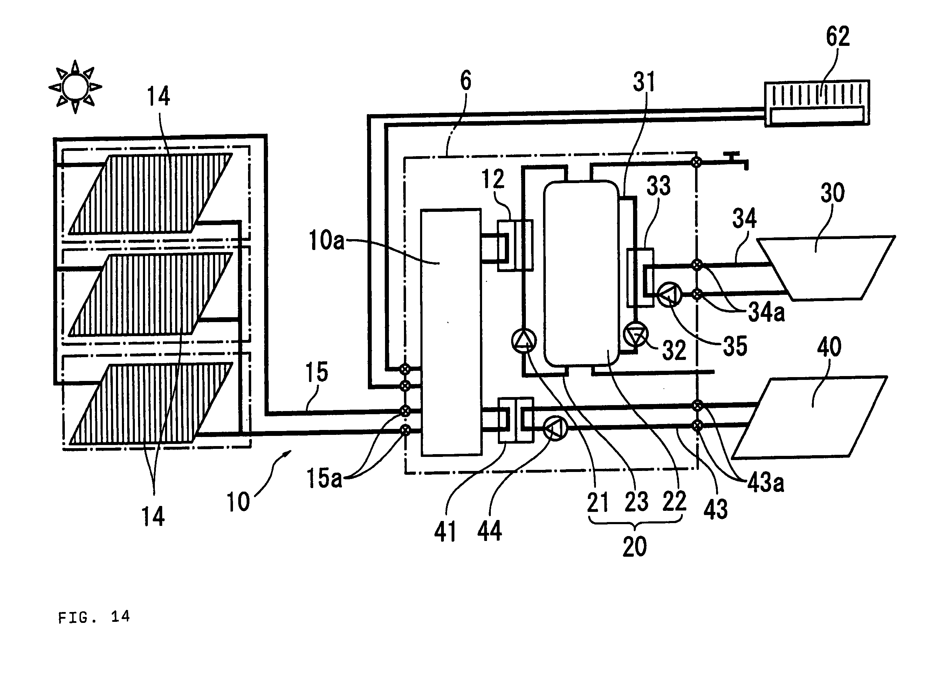

Next, a hot water supply device for a house according to another embodiment will be explained using Fig. 14.
Fig. 14 is a circuit diagram of the hot water supply device for a house according to the other embodiment. Structures which are common to those in the above embodiments are designated with the same numbers and explanation thereof will be omitted.
In this embodiment, like the embodiments shown in Figs. 12 and 13, the air conditioner 62 is provided, but the air conditioner 62 of the present embodiment has a heating function. This embodiment has a refrigerant circuit 10a as piping structure, and detailed explanation of the piping structure will be omitted.
In this embodiment, the air conditioner 62 is provided with the heat radiating function so that the air conditioner 62 can carried out the heating operation. When the air conditioner 62 is used for heating air, heat collection of the heat collector 14 can be used, and when the heat collection by the heat collector 14 is insufficient, hot water in the hot water storage tank 22 can be utilized.

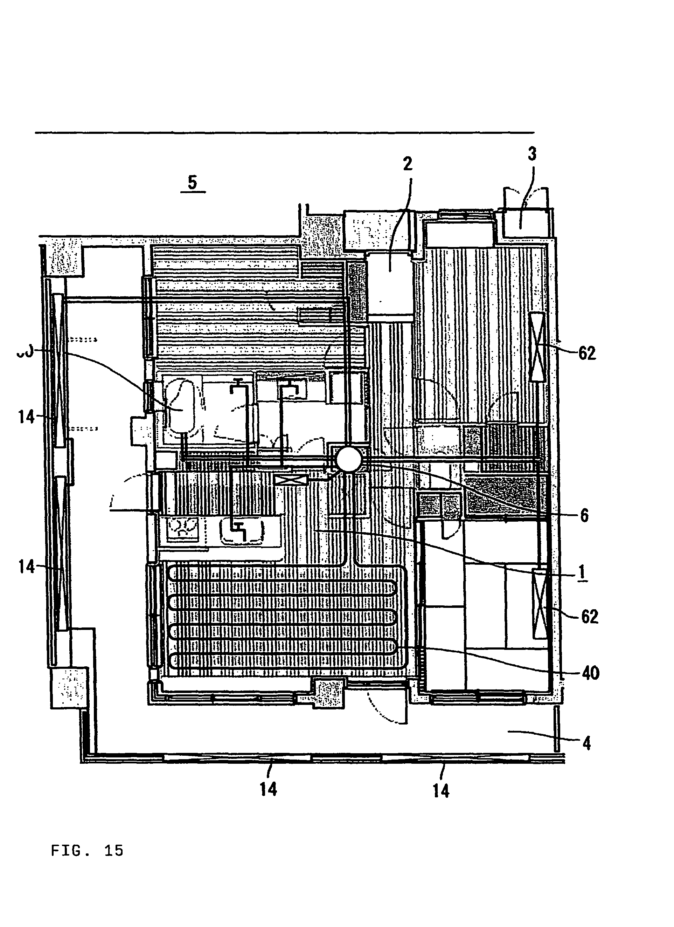

Next, a hot water supply device for a house according to another embodiment will be explained using Fig. 15.
Fig. 15 is an explanatory diagram showing a using state of a hot water supply device for a house according to the other embodiment. Structures which are common to those in the above embodiments are designated with the same numbers and explanation thereof will be omitted.
Fig. 15 shows a floor plan that is different from that of the embodiment shown in Fig. 1. The entrance-hall 2 and the meter box 3 are disposed on one side of the living space 1, and the balconies 4 are provided on two other sides of the living space 1.
According to the present embodiment, a plurality of heat collectors 14 are disposed in each of the balconies on the two other sides. The heat source unit 6 is disposed in an armoire in the living space 1. In this embodiment, a lavatory and a bath room are disposed at locations separated away from the passage 5, a faucet of the kitchen is disposed close to a center of the living space 1, and the armoire is disposed at the center of the living space 1. Therefore, by disposing the heat source unit 6 in the armoire rather than in the meter box 3, the hot water supply piping to the faucet and the run length of the reheating water piping 34 to the bathtub 30 are short and thus, it is possible to supply with excellent response. Further, by disposing the heat source unit 6 in the living space 1 as in this embodiment, it is possible to prevent the heat source unit 6 from being frozen, heat radiation of the water piping 23 can be reduced and thus, the hot water supply efficiency can be enhanced. Since the heat source unit 6 is provided in the armoire formed at the center of the living space 1, connection piping for the air conditioner 62 and the floor heating system 40 provided in each room, bath room heater and a spot air conditioner in a kitchen can easily run.

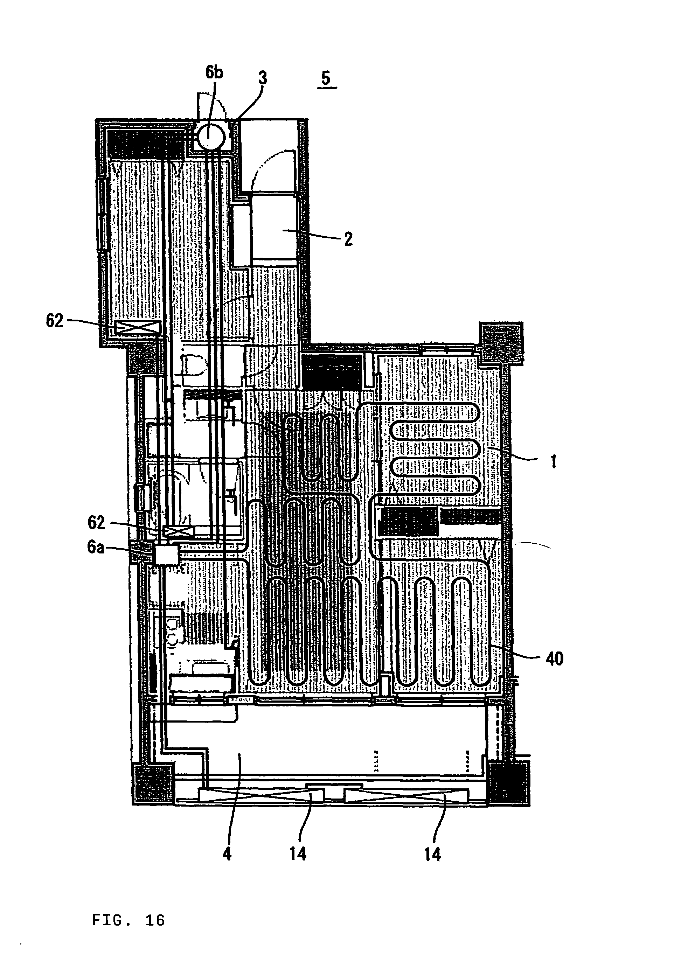

Next, a hot water supply device for a house according to another embodiment will be explained using Fig. 16.
Fig. 16 is an explanatory diagram showing a using state of a hot water supply device for a house according to the other embodiment. Structures which are common to those in the above embodiments are designated with the same numbers and explanation thereof will be omitted.
Fig. 16 shows a floor plan that is different from the embodiment shown in Fig. 1. The entrance-hall 2 and the meter box 3 are disposed on one side of the living space 1, and the balcony 4 is provided on the other side of the living space 1.
The heat source unit 6 of the embodiment includes the heat pump unit 6a and the hot water storage unit 6b. The heat pump unit 6a is disposed in the kitchen in the living space 1, and the hot water storage unit 6b is disposed in the meter box 3. By disposing the heat pump unit 6a in the living space 1 as in this embodiment, connection piping for the air conditioner 62 and the floor heating system 40 provided in each room, bath room heater and a spot air conditioner in a kitchen can easily run.

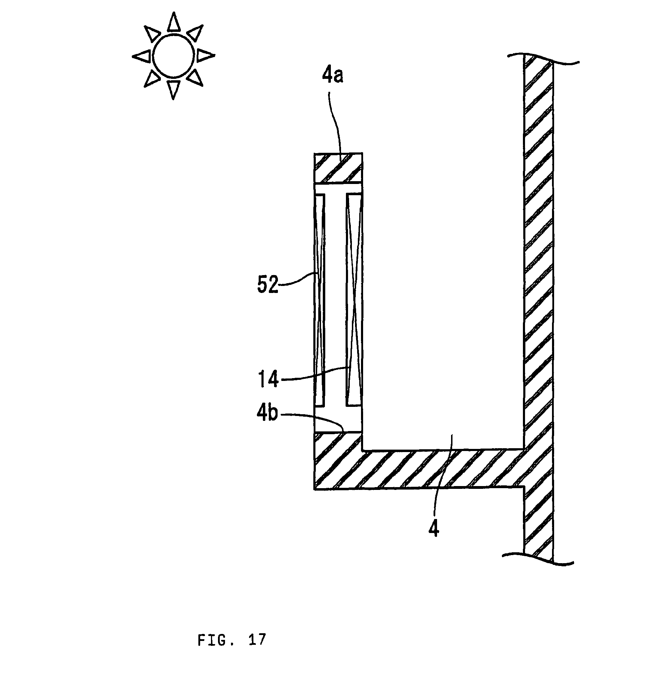

Next, another embodiment of an installed state of a heat collector to multiple dwelling houses will be explained using Fig. 17.
Fig. 17 is a sectional view of a handrail showing the installed state of the heat collector according to the embodiment.
In this embodiment, the heat collector 14 is disposed in the opening 4b, and a solar battery 52 is provided outside of the opening 4b. The embodiment also includes the electricity-storing function.

Next, a structure of the heat collector according to this embodiment will be explained.

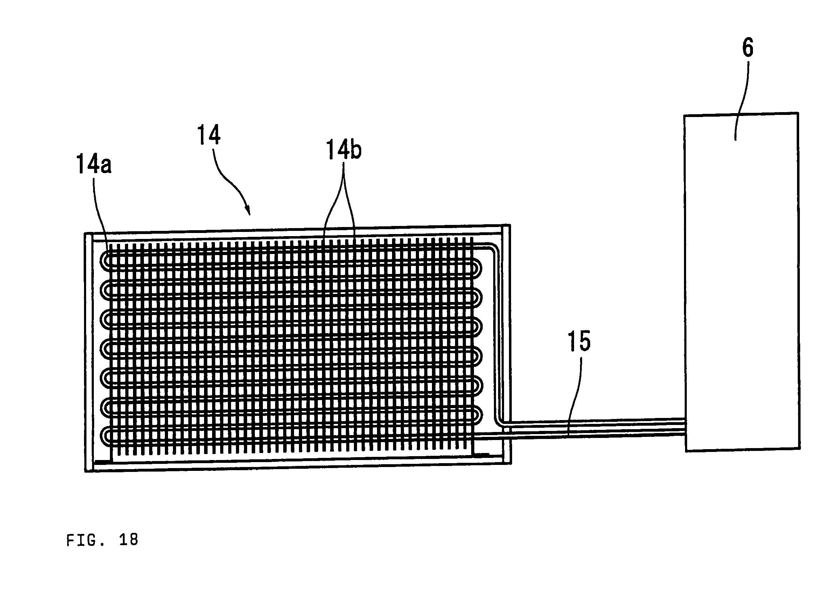

Fig. 18 is a front view of the heat collector according to the embodiment.
The heat collector 14 includes a tier of heat collecting pipe 14a and a fin 14b. The heat collecting pipe 14a is disposed in parallel to each other on one plane, and both ends are connected to each other thought U-shaped pipes. The fin 14b is disposed in a direction perpendicular to the axis of the heat collecting pipe 14a, and a plurality of fins 14b are disposed at distances from one another. According to the embodiment, since a tier of heat collecting pipes 14a is used, it becomes easy to receive the solar heat, natural wind can easily be utilized and the atmospheric heat can also be utilized effectively.

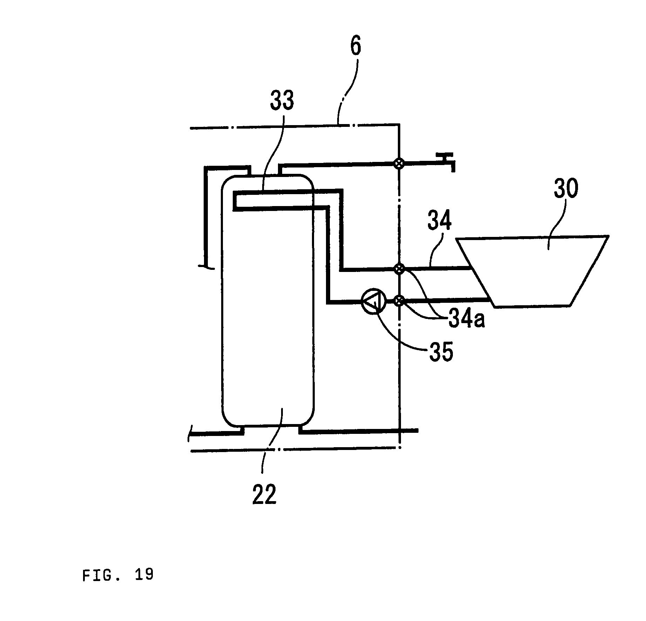

Fig. 19 is a circuit diagram showing an essential portion of a hot water supply device for a house according to another embodiment.
According to this embodiment, in the embodiments shown in Figs. 2, 3, 4, 9, 10, 11, 12, 13 and 14, the bath heat exchanger 33 is provided in the hot water storage tank 22 instead of providing the bathtub water piping 31 and the bath reheating pump 32, and the reheating water piping 34 is connected to the bath heat exchanger 33. The bath heat exchanger 33 may be provided in a tank 22 as in this embodiment.

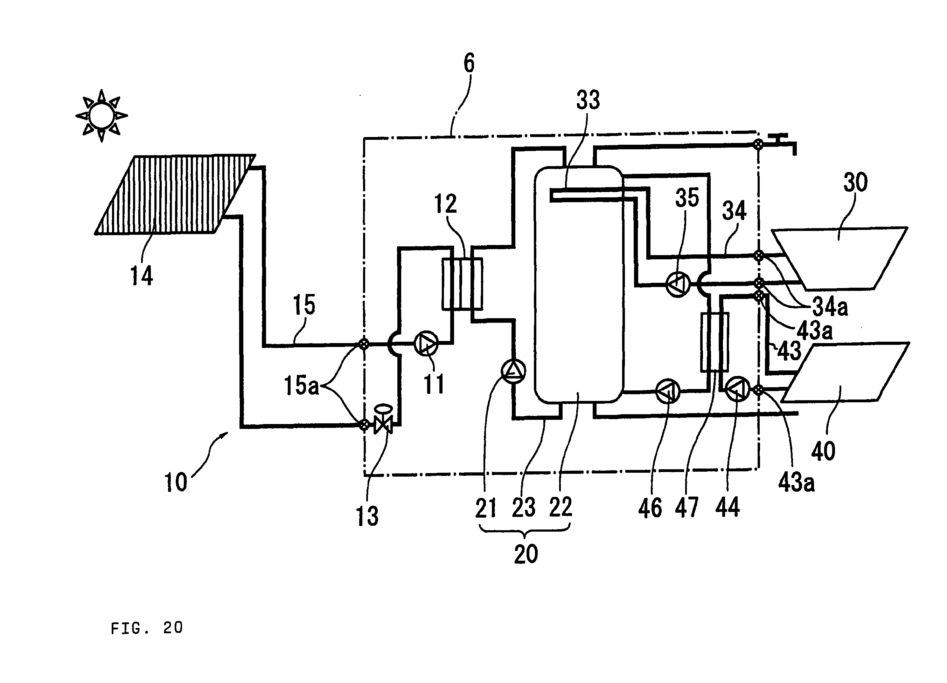

Fig. 20 is a circuit diagram of a hot water supply device for a house according to another embodiment.
In this embodiment, in the embodiment shown in Fig. 5, the bath heat exchanger 33 is provided in the hot water storage tank 22 instead of providing the bathtub water piping 31 and the bath reheating pump 32, and the reheating water piping 34 is connected to the bath heat exchanger 33. The bath heat exchanger 33 may be provided in a tank 22 as in this embodiment.

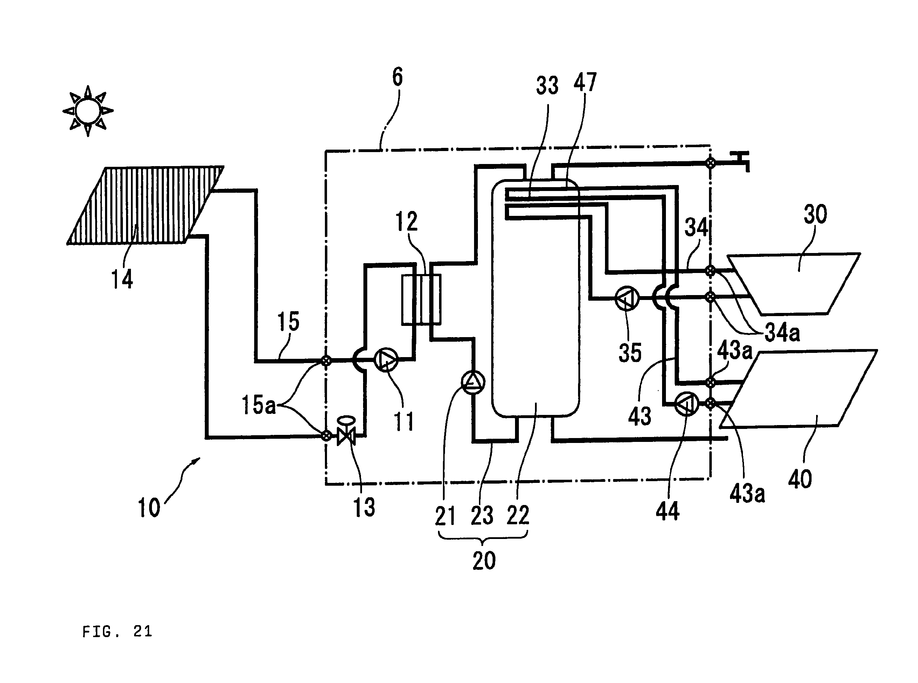

Fig. 21 is a circuit diagram of a hot water supply device for a house according to another embodiment.
According to this embodiment, in the embodiment shown in Fig. 20, the floor-heating heat exchanger 47 is provided in the hot water storage tank 22 instead of providing the floor-heating water piping 45 and the floor-heating pump 46, and the heat medium circulation piping 43 is connected to the floor-heating heat exchanger 47. The floor-heating heat exchanger 47 can be provided in the tank 22 as in this embodiment.

The above embodiments have been described based on multiple dwelling houses such as a condominium, but the invention can also be applied to a building having no balcony if a heat collector 14 is disposed on a wall surface instead of the handrail. On a second floor of a stand-alone house, it can be disposed utilizing a handrail or a wall surface of a veranda. In the case of the stand-alone house, the heat source unit can be disposed in the living space.
A porch is provided in a space extending from an entrance-hall to a passage in some cases. Further, a trunk room is provided such that it faces the porch, the entrance-hall or the passage in some cases. In such cases, the heat source unit or the hot water storage unit may be disposed in the porch or the trunk room. When the entrance-hall space is wide, the heat source unit or the hot water storage unit may be disposed in the entrance-hall.

### [Industrial Applicability]

The hot water supply device for a house of the present invention is suitable for a condominium or an apartment having a balcony.

## Claims

1. A hot water supply device for a house wherein
a compressor, a hot water supply heat exchanger, an expansion valve and a heat collector are connected to each other through refrigerant piping to constitute a refrigerant circuit,
a hot water supply pump, the hot water supply heat exchanger and a hot water storage tank are connected to each other through water piping to constitute a hot water supply circuit,
the heat collector includes a heat collecting pipe and a fin which utilize solar heat and atmospheric heat caused by natural wind,
the compressor, the hot water supply heat exchanger, the expansion valve, the hot water supply pump and the hot water storage tank constitute a heat source unit, and
the heat collector and the heat source unit are connected to each other through the refrigerant piping disposed in a space under a floor or above a ceiling of a living space having a bath room or a kitchen.

2. The hot water supply device for a house according to claim 1, further comprising a meter box disposed on one side of the living space and a balcony disposed on the other side of the living space, wherein the heat source unit is disposed in the meter box, and the heat collector is disposed in the balcony.

3. The hot water supply device for a house according to claim 1, further comprising a bath heat exchanger which exchanges heat of hot water in the hot water storage tank, reheating water piping which connects the bath heat exchanger and a bathtub with each other, and a bath circulation pump provided in the reheating water piping, wherein
the bath heat exchanger and the bath circulation pump are provided in the heat source unit.

4. The hot water supply device for a house according to claim 3, further comprising a heating heat exchanger provided in parallel to the hot water supply heat exchanger, and switching means which switches over flows of a refrigerant toward the hot water supply heat exchanger and the heating heat exchanger in the refrigerant circuit, and
a floor heating system disposed in the living space, a heat medium circulation piping which circulates a heat medium through the floor heating system and the heating heat exchanger, and a heating circulation pump provided in the heat medium circulation piping, wherein
the heat source unit includes the heating heat exchanger, the switching means and the heating circulation pump.

5. The hot water supply device for a house according to claim 3, wherein the heat source unit includes a heat pump unit and a hot water storage unit,
the heat pump unit includes the compressor, the hot water supply heat exchanger and the expansion valve,
the hot water storage unit includes the hot water supply pump, the hot water storage tank, the bath heat exchanger and the bath circulation pump,
the hot water storage unit is disposed in the meter box, and
the heat pump unit is disposed in the balcony or the living space.

6. The hot water supply device for a house according to claim 4, wherein the heat source unit includes a heat pump unit and a hot water storage unit,
the heat pump unit includes the compressor, the hot water supply heat exchanger, the expansion valve, the heating heat exchanger, the switching means and the heating circulation pump,
the hot water storage unit includes the hot water supply pump, the hot water storage tank, the bath heat exchanger and the bath circulation pump,
the hot water storage unit is disposed in the meter box, and
the heat pump unit is disposed in the balcony or the living space.

7. The hot water supply device for a house according to claim 1, further comprising a floor-heating heat exchanger which exchanges heat of hot water in the hot water storage tank, heat medium circulation piping which connects the floor-heating heat exchanger and a floor heating system with each other, and a heating circulation pump provided in the heat medium circulation piping, wherein
the floor-heating heat exchanger and the heating circulation pump are provided in the heat source unit.

8. The hot water supply device for a house according to claim 1, wherein an opening is formed in a handrail of the balcony, and the heat collector is disposed in the opening.

9. The hot water supply device for a house according to claim 8, wherein a fixing tool is provided in the opening on the side of the balcony.

10. The hot water supply device for a house according to claim 8, wherein the fin is disposed such that a long side of the fin has an angle with respect to the vertical direction.

11. The hot water supply device for a house according to claim 1, wherein the expansion valve is disposed in the balcony instead of in the meter box.

12. The hot water supply device for a house according to claim 11, wherein the plurality of heat collector are used, and each of the heat collectors is provided with the expansion valve.

13. The hot water supply device for a house according to claim 11, wherein the plurality of heat collectors are used, and the only one expansion valve is used.

14. The hot water supply device for a house according to claim 8, wherein a solar battery is provided outside the opening.

15. The hot water supply device for a house according to claim 1, wherein a tier of the heat collecting pipe is used.

16. The hot water supply device for a house according to claim 1, wherein the heat source unit is disposed in a porch or a trunk room disposed on one side of the living space instead of in the meter box.

17. The hot water supply device for a house according to claim 5 or 6, wherein the hot water storage unit is disposed in a porch or a trunk room disposed on one side of the living space instead of in the meter box.

18. The hot water supply device for a house according to claim 1, wherein the heat source unit is disposed in the living space instead of in the meter box.

19. The hot water supply device for a house according to claim 5 or 6, wherein the hot water storage unit is disposed in the living space instead of in the meter box.

## Amended claims

### Amended claims under Art. 19.1 PCT

**1.** original) A hot water supply device for a house wherein
a compressor, a hot water supply heat exchanger, an expansion valve and a heat collector are connected to each other through refrigerant piping to constitute a refrigerant circuit,
a hot water supply pump, the hot water supply heat exchanger and a hot water storage tank are connected to each other through water piping to constitute a hot water supply circuit,
the heat collector includes a heat collecting pipe and a fin which utilize solar heat and atmospheric heat caused by natural wind,
the compressor, the hot water supply heat exchanger, the expansion valve, the hot water supply pump and the hot water storage tank constitute a heat source unit, and
the heat collector and the heat source unit are connected to each other through the refrigerant piping disposed in a space under a floor or above a ceiling of a living space having a bath room or a kitchen.

**2.** original) The hot water supply device for a house according to claim 1, further comprising a meter box disposed on one side of the living space and a balcony disposed on the other side of the living space, wherein the heat source unit is disposed in the meter box, and the heat collector is disposed in the balcony.

**3.** original) The hot water supply device for a house according to claim 1, further comprising a bath heat exchanger which exchanges heat of hot water in the hot water storage tank, reheating water piping which connects the bath heat exchanger and a bathtub with each other, and a bath circulation pump provided in the reheating water piping, wherein the bath heat exchanger and the bath circulation pump are provided in the heat source unit.

**4.** original) The hot water supply device for a house according to claim 3, further comprising a heating heat exchanger provided in parallel to the hot water supply heat exchanger, and switching means which switches over flows of a refrigerant toward the hot water supply heat exchanger and the heating heat exchanger in the refrigerant circuit, and a floor heating system disposed in the living space, a heat medium circulation piping which circulates a heat medium through the floor heating system and the heating heat exchanger, and a heating circulation pump provided in the heat medium circulation piping, wherein
the heat source unit includes the heating heat exchanger, the switching means and the heating circulation pump.

**5.** currently amended) The hot water supply device for a house according to claim 4, wherein the heat source unit includes a heat pump unit and a hot water storage unit,
the heat pump unit includes the compressor, the hot water supply heat exchanger and the expansion valve,
the hot water storage unit includes the hot water supply pump, the hot water storage tank, the bath heat exchanger and the bath circulation pump,
the hot water storage unit is disposed in a meter box which is provided on one side in the living space, and
the heat pump unit is disposed in a balcony which is provided on the other side of the living space or the living space.

**6.** currently amended) The hot water supply device for a house according to claim 4, wherein the heat source unit includes a heat pump unit and a hot water storage unit,
the heat pump unit includes the compressor, the hot water supply heat exchanger, the expansion valve, the heating heat exchanger, the switching means and the heating circulation pump,
the hot water storage unit includes the hot water supply pump, the hot water storage tank, the bath heat exchanger and the bath circulation pump,
the hot water storage unit is disposed in a meter box which is provided on one side in the living space, and
the heat pump unit is disposed in a balcony which is provided on the other side of the living space or the living space.

**7.** currently amended) The hot water supply device for a house according to claim 3, further comprising a floor-heating heat exchanger which exchanges heat of hot water in the hot water storage tank, heat medium circulation piping which connects the floor-heating heat exchanger and a floor heating system with each other, and a heating circulation pump provided in the heat medium circulation piping, wherein
the floor-heating heat exchanger and the heating circulation pump are provided in the heat source unit.

**8.** currently amended) The hot water supply device for a house according to claim 2, wherein an opening is formed in a handrail of the balcony, and the heat collector is disposed in the opening.

**9.** original) The hot water supply device for a house according to claim 8, wherein a fixing tool is provided in the opening on the side of the balcony.

**10.** original) The hot water supply device for a house according to claim 8, wherein the fin is disposed such that a long side of the fin has an angle with respect to the vertical direction.

**11.** canceled)

**12.** currently amended) The hot water supply device for a house according to claim 1, wherein the plurality of heat collector are used, and the expansion valve is provided for each other heat collector.

**13.** currently amended) The hot water supply device for a house according to claim 1, wherein the plurality of heat collectors are used, and the only one expansion valve is used.

**14.** original) The hot water supply device for a house according to claim 8, wherein a solar battery is provided outside the opening.

**15.** original) The hot water supply device for a house according to claim 1, wherein a tier of the heat collecting pipe is used.

**16.** currently amended) The hot water supply device for a house according to claim 2, wherein the heat source unit is disposed in a porch or a trunk room disposed on one side of the living space instead of in the meter box.

**17.** original) The hot water supply device for a house according to claim 5 or 6, wherein the hot water storage unit is disposed in a porch or a trunk room disposed on one side of the living space instead of in the meter box.

**18.** currently amended) The hot water supply device for a house according to claim 2, wherein the heat source unit is disposed in the living space instead of in the meter box.

**19.** original) The hot water supply device for a house according to claim 5 or 6, wherein the hot water storage unit is disposed in the living space instead of in the meter box.
